# EUROPEAN PATENT APPLICATION

(11) **EP 4 741 226 A1**
(43) Date of publication of application: **13.05.2026**
(21) Application number: 25383201.8
(22) Date of filing: 04.11.2025
(51) Int. Cl.: B60N 2/58, B60N 2/60

(54) **A VEHICLE SEAT BACK COVER AND A REAR SEAT BACK ASSEMBLY**

(30) Priority: 11.11.2024 ES 202430930
(71) Applicant: Seat, S.A., 08760 Martorell (ES)
(72) Inventor: MORENO BARBETA, Alfons, 08760 Martorell (ES); FERNANDEZ PADILLA, Miguel Angel, 08760 Barcelona (ES)
(74) Representative: Elzaburu S.L.P.

(57) **Abstract**

A seat back cover (13) of a seat back assembly (11) of a vehicle seat comprises a "U"-shaped retaining channel (22) extending along the perimeter of the rear surface of the seat back cover (13), securing the outer edge of the upholstery material (12) press-fitted into the hollow groove defined by the retaining channel (22). The retaining channel (22) comprises a first part (221) extending inwards toward a seat back cushion (21) along a **Y**-axis cross section of the vehicle from a side surface of the cushion (21), and a second part (222) of the retaining channel (22) extending parallel to the outer surface of the cushion (21) in the vehicle's forward direction along a longitudinal X-axis of the vehicle.

## Description

### TECHNICAL FIELD

This document generally refers to a motor vehicle seat and, more specifically, to a modular motor vehicle seat back assembly comprising a back cover partially covering said seat back.

### BACKGROUND

In general, vehicle seats are expensive and time-consuming to design and develop. All seat components depend on the base structure design of each seat type, which includes different built-in adjustment and comfort features. This creates design limitations and requires complex technical solutions that restrict the flexibility and creativity of the seat design and its upholstery process.

When the seat trim parts are installed, these are attached to the seat frame along with a cushion foam. The cushion foam is upholstered with an upholstery material that is secured around the cushion foam.

Seat assembly processes are complex and time-consuming, some of them being manual, especially when the different built-in adjustment and comfort features of each seat type shall also be considered. This is the case even when the cushion foam and upholstery are pre-assembled outside the vehicle as an essentially modular unit.

Seat back covers for vehicle seats that comprise the features included in the preamble of Claim 1 are known.

Such is the case, for example, as described in patent document US 20130119730 A1, in which the seat back cover comprises a retaining channel that extends, at least partially, along the perimeter of the seat back cover. The retaining channel has a "**U**"-shaped cross section and is set to retain the upholstery material of a vehicle seat back assembly, the edge of which may be inserted into the "**U**"-shaped retaining channel.

The retaining channel described in said patent document is arranged on the rear surface of the seat back cover. In the event that a side airbag system is built into said seat back, the location and geometry of said retaining channel require that the airbag expansion channel be generated through the upholstery material, for example, by breaking a weakened area of said upholstery material. Repairing the seat back after an airbag deployment requires the replacement of the textile material, among other components.

Therefore, it is necessary to provide an alternative to the prior art that addresses the identified shortcomings by providing a seat back cover, a cushion foam, and upholstery that may be assembled and installed easily and in reduced assembly time in a vehicle, both for original equipment manufacturing and for vehicle maintenance applications.

### SUMMARY OF THE INVENTION

In the first aspect of the invention, the solution refers to a vehicle seat back cover.

The seat back cover is attachable to a vehicle seat structure, covering the rear surface and, at least partially, the side surfaces of a seat back assembly. Said seat back cover comprises two side surfaces joined by a connecting surface and a retaining channel. The retaining channel has an "**U**"-shaped cross section and is set to press-fit the outer peripheral edge of upholstery material of the seat back assembly, which may be inserted into the bottom of the "**U**"-shaped retaining channel.

In this invention, "seat back cover" refers to the component, generally made of plastic and a single block, covering the rear surface and, partially, the side surfaces of the seat. It is especially used in bucket-type seats, in which the backrest integrates the headrest into the same body.

Unlike other current solutions in which the retaining channel is arranged on the rear surface, the "**U**"-shaped retaining channel, according to this invention, extends along the outer peripheral edge of the side surfaces and the upper section of the connecting surface of the seat back cover. That is to say, the lower area of the backrest may not require a retaining channel and may lack one, as the outer peripheral edge of the upholstery material may be secured to a surface not visible to the user, for example, an internal surface. Alternatively, the "**U**"-shaped retaining channel may also extend along the lower section of the connecting surface of the seat back cover.

Preferably, the extension of the channel along the outer peripheral edge of the side surfaces and the upper section is continuous, from a lower end of the peripheral edge of the left-side surface to a lower end of the peripheral edge of the right-side surface. Alternatively, it may be a partial extension, not continuously covering these sections.

The modified arrangement of the retaining channel compared to previous solutions allows for improved assembly and maintenance of the vehicle seat, for example, after the deployment of an airbag installed in said seat. In other words, the arrangement, according to this invention, avoids, among other actions, the need to provide an airbag expansion channel through the upholstery material, which would require its replacement in the event of airbag activation. The airbag expansion channel may instead be provided through the side surface of the seat back cover.

In a second aspect, the invention refers to a rear vehicle seat back assembly. The assembly comprises:
- a seat back cushion support structure adapted to be attached to the vehicle seat frame,
- a seat foam adapted to cover the seat back cushion support structure,
- upholstery material, and
- a seat back cover according to this invention.

As previously mentioned, the novel arrangement of the "**U**"-shaped retaining channel, set to press-fit the outer peripheral edge of upholstery material, allows both the seat back cover and the upholstery material to externally cover the vehicle seat back assembly.

Therefore, the "**U**"-shaped retaining channel according to this alternative allows for an easy installation and reduced assembly time. The resulting design is a flush aesthetic between the upholstery material and the seat shell. This feature applies both to original equipment manufacturing and to vehicle maintenance applications, for example, after the deployment of an airbag installed in the seat.

### LIST OF NUMERICAL REFERENCES

11 Seat back assembly
12 Upholstery material
13 Seat back cover
15 Airbag cover
21 Seat back cushion
22 Retaining channel
221 First part of the retaining channel
222 Second part of the retaining channel
223 Transition part
23 Airbag

### BRIEF DESCRIPTION OF THE DRAWINGS

Figure 1 shows a side view of a seat back assembly, particularly of the left side of the assembly, in which a seat back cover is arranged covering, at least partially, the side surface of said backrest.
Figure 2 shows a section of a seat back assembly, in which a retaining channel and a seat back cover is flush with the upholstery material of a vehicle seat.
Figure 3 shows a side view of a retaining channel comprising a first and a second part, and a transition part linking said first part and second part of the retaining channel.

### DETAILED DESCRIPTION OF THE INVENTION

As previously mentioned, in the first aspect of the invention, the solution refers to a seat back cover (13) of a vehicle seat.

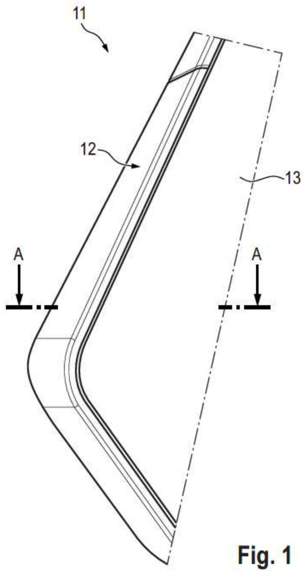

As shown in Figure 1, the seat back cover (13) is attachable to a vehicle seat structure, covering the rear surface and, at least partially, the side surfaces of a seat back assembly (11). Said seat back cover (13) comprises two side surfaces joined by a connecting surface and a retaining channel (22). The seat back cover (13) consists of a single body, preferably made of plastic material obtained through an injection molding process, encompassing said side surfaces, connecting surface, and retaining channel (22).

The retaining channel (22) has a "**U**"-shaped cross section. Furthermore, it is set to press-fit the outer peripheral edge of upholstery material (12) of the seat back assembly (11), which may be inserted into the bottom of the retaining channel (22). Therefore, said retaining channel (22) forms a cavity to retain the outer edge of the upholstery material (12), specifically through a plastic connecting element that connects with the outer edge of the upholstery material (12). Said connecting element is arranged along the entire outer peripheral edge of the upholstery material (12). Thus, the retaining channel (22) is a continuous channel arranged along the peripheral edge of the seat back cover, and it is set to receive said connecting element by pressure.

It is important to note that the retaining channel (22), according to this invention, extends along the outer peripheral edge of the side surfaces and the upper section of the connecting surface of the seat back cover (13). In this regard, the lower area of the backrest does not require a retaining channel (22) and, in this preferred embodiment, lacks a retaining channel (22).

The extension of the retaining channel (22) along the outer peripheral edge of the side surfaces and the upper section may be a partial extension, not continuously covering these sections. In other words, the retaining channel (22) extends, at least partially, along the outer peripheral edge of the side surfaces and the upper section of the connecting surface of the seat back cover (13).

The modified arrangement of the retaining channel (22) compared to previous solutions allows for improved assembly and maintenance of the vehicle seat, for example, after the deployment of an airbag installed in said seat. That is to say, the arrangement, according to this invention, avoids, among other actions, the need to provide an airbag (23) expansion channel through the upholstery material (12), which would require its replacement in the event of airbag activation. Thus, the arrangement according to this invention allows the airbag deployment area to be located through the seat back cover (13), without affecting the upholstery material or the seat foam itself.

In one particular embodiment, the retaining channel (22) may comprise a first and/or a second part (221, 222).

In this regard, the retaining channel (22) may comprise a first part (221) arranged along each of the side surfaces of the seat back cover (13). Thus, both ends of the "**U**"-shaped geometry of the retaining channel (22) are aligned with their respective side surface of the seat back cover (13), with the bottom of said first "**U**"-shaped part (221) extending inward toward the side of the seat back cushion (21). In this way, the bottom extension is carried out along a **Y**-axis cross section of the vehicle.

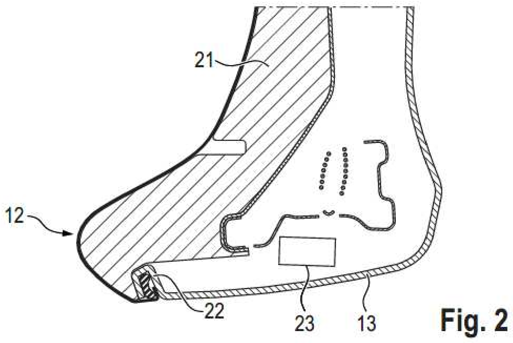

For greater clarity, the **Y**-axis cross section of the vehicle may be understood as an axis parallel to the seat back structure to which the seat back cover (13) is attachable. Thus, as depicted in Figure 2, the retaining channel (22) of the side surface is arranged inward, toward the seat structure. Consequently, when the airbag (23) of the airbag module inflates and exits the seat back, it contacts the outer side surface of the seat back cover (13) and encounters no obstacle or impediment, since the retaining channel (22) is flush with said side surface.

Additionally, or alternatively, the "**U**"-shaped retaining channel (22) may comprise a second part (222). The second part (222) is arranged along the upper section of the connecting surface of the seat back cover (13). Both ends of the "**U**"-shaped geometry of the retaining channel (22) are aligned with the rear surface of the seat back cover (13), with the bottom of said second "**U**"-shaped part (222) extending inward toward the upper section of the seat back cushion (21) along a longitudinal **X-**axis of the vehicle.

In one particular embodiment of the retaining channel (22), the second part (222) oriented along the **X**-axis coincides with the demolding direction of the seat back cover (13). The demolding direction of the seat back cover (13) is perpendicular to the connecting surface, or user support surface. This simplifies the mold required for manufacturing the seat back cover (13), eliminating the need for sliders in said second part (222) of the retaining channel (22). Sliders would only be required in the first parts (221) of the retaining channel (22), which are oriented along the **Y**-axis.

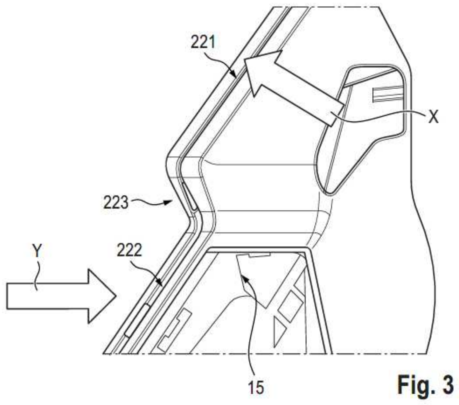

As depicted in Figure 3, according to these particular embodiments, the retaining channel (22) may comprise a transition part (223) arranged between the second part (222) and each of the two first parts (221). In Figure 3, which shows the demolding direction of a first part (221) and the second part (222), it may be seen that the transition part (223) of the retaining channel (22) adopts a helical shape when transitioning from the **Y**-axis orientation of the first part (221) of the retaining channel (22) to the X-axis orientation, perpendicular to the **Y**-axis, of the second part (222) of the retaining channel (22). In this way, the retaining channel (22) is arranged as a single channel joining both first parts (221) with said second part (222) by means of both transition parts (223). For said transition part (223), the use of sliders is likewise necessary in order to demold the seat back cover (13).

Furthermore, in one particular embodiment, each transition part (223) of the retaining channel (22) connects the upper end of a respective first part (221) with the lower end of the second part (222). Said second part (222) is located in the lower area of the headrest of the seat back cushion (21), which is close to the shoulder of a vehicle seat occupant in use.

In another particular embodiment, the transition part (223) is adapted to facilitate assembly and/or disassembly of the upholstery material (12) of the seat back cushion (21) of the vehicle seat. Said transition part (223), having a preferably curved or helical geometry, allows the "**U**"-shaped channel orientation to change progressively from an **X**-axis direction to a **Y**-axis direction, which facilitates the press-fit insertion of the plastic connecting element attached to the outer edge of the upholstery material (12) into the "**U**"-shaped cavity of the retaining channel (22).

In particular, the second part (222) of the retaining channel (22) oriented along the **X**-axis may correspond to the upper side of the seat back cushion (21) headrest of the vehicle seat. This upper area of the seat back is not affected by the deployment of the airbag (23), so the "**U**"-shaped retaining channel (22) may be oriented along the **X**-axis, simplifying the manufacturing process of the seat back cover (13), since this orientation coincides with the demolding direction of said seat back cover (13).

On the one hand, the first part (221) of the retaining channel (22) along the **Y-**axis may correspond to the lateral side of the seat back cushion (21) of the vehicle seat. As previously mentioned, said **Y**-axis orientation of the retaining channel (22) is required to make the retaining channel (22) flush with the side surfaces of the seat back cover (13), allowing an unobstructed airbag (23) deployment that preserves its integrity and ensures proper functioning.

On the other hand, in another particular embodiment of the retaining channel (22), the bottom has a suitable depth to press-fit and retain the edge of the upholstery material (12) along the length of said retaining channel (22), specifically the additional plastic element arranged along the peripheral edge of the upholstery material (12) and connected thereto.

In another particular embodiment, the "**U**"-shaped retaining channel (22) is integrally formed or molded in the seat back cover (13), forming a single body. The seat back cover (13) may be a rigid plastic cover. Said molding process may be a plastic injection.

In a second aspect, the invention refers to a rear vehicle seat back assembly (11). The assembly comprises a seat back cushion support structure (21), a seat foam, upholstery material (12), and a seat back cover (13).

Thus, the seat cushion support structure (21) is adapted to be attached to the vehicle seat frame. The seat foam is adapted to cover the seat back cushion support structure (21) and, in turn, to be covered by the upholstery material (12). To this end, in one particular embodiment, the upholstery material (12) may be made of a deformable material that allows a certain degree of flexibility during handling in order to sheath the assembly formed by the foam and the cushion support structure (21).

Furthermore, the rear seat back assembly (11) may comprise an airbag cover (15). This airbag cover (15) may be arranged on at least one of the side surfaces of the seat back cover (13) and covers an outlet opening for an airbag (23). Consequently, the seat back assembly (11) comprises an airbag module arranged on one or both sides of the seat back, within a cavity. The seat back cover (13) comprises an opening facing said cavity, set to allow the outlet of the airbag (23) during its expansion or inflation. The airbag cover (15) is arranged covering said opening.

The airbag cover (15) comprises means for allowing said airbag deployment, such as a hinge set to pivot in relation to the seat back cover (13) upon expansion of the airbag (23). During expansion, the airbag (23) pushes said airbag cover (15). When the force of this push exceeds a default value, the airbag cover (15) pivots, creating an opening through which the airbag (23) exits towards the exterior of the seat back. Said airbag (23) slides along the outer side surface of the seat back cover (13) and over the upholstery material (12), whose outer peripheral edge is press-fitted within the retaining channel (22).

In other words, as previously mentioned, the novel arrangement of the retaining channel (22), set to press-fit the outer peripheral edge of the upholstery material (12), allows both the seat back cover (13) and the upholstery material (12) to externally cover the seat back assembly (11) of the vehicle seat. The "**U**"-shaped retaining channel (22) according to this alternative allows for an easy installation and reduced assembly time. The resulting design is a flush aesthetic between the upholstery material (12) and the seat shell. This feature applies both to original equipment manufacturing and to vehicle maintenance applications. Furthermore, it allows for a better installation of the airbag system, wherein an airbag cover (15) is movable upon the exit of the airbag (23) installed in the seat, without affecting the integrity of the upholstery material (12) used in the assembly (11).

## Claims

1. A vehicle seat back cover, wherein the seat back cover (13) is attachable to a vehicle seat structure, covering the rear surface and, at least partially, the side surfaces of a seat back assembly (11), wherein said seat back cover (13) comprises two side surfaces joined by a connecting surface and a retaining channel (22) having a "**U**"-shaped cross-section and set to press-fit the outer peripheral edge of the upholstery material (12) of the seat back assembly (11) which may be inserted into the bottom of the "**U**"-shaped retaining channel (22),
**characterized in that**
the "**U**"-shaped retaining channel (22) extends, at least partially, along the outer peripheral edge of the side surfaces and the upper section of the connecting surface of the seat back cover (13).

2. The seat back cover according to Claim 1, wherein the retaining channel (22) comprises a first part (221) arranged along each of the side surfaces of the seat back cover (13), wherein both ends of the "**U**"-shaped geometry of the retaining channel (22) are aligned with their respective side surface of the seat back cover (13), the bottom of said first "**U**"-shaped portion (221) extending inwards toward the side of the seat back cushion (21) along a **Y**-axis cross section of the vehicle.

3. The seat back cover according to any of the preceding claims, wherein the retaining channel (22) comprises a second part (222) arranged along the upper section of the connecting surface of the seat back cover (13), wherein both ends of the "**U**"-shaped geometry of the retaining channel (22) are aligned with the rear surface of the seat back cover (13), the bottom of said second "**U**"-shaped part (222) extending inwards toward the upper section of the seat back cushion (21) along a longitudinal **X**-axis of the vehicle.

4. The seat back cover according to Claims 2 and 3, wherein the retaining channel (22) comprises a transition part (223) arranged between the second part (222) and each of the two first parts (221), the retaining channel (22) adopting a helical shape when transitioning from the orientation along the **Y**-axis of the first part (221) of the retaining channel (22) to the orientation along the **X**-axis of the second part (222) of the retaining channel (22), forming a single continuous channel connecting both first parts (221) with said second part (222) through both transition parts (223).

5. The seat back cover according to Claim 4, wherein each transition part (223) of the retaining channel (22) connects the upper end of a respective first part (221) with the lower end of the second part (222), which is located in the lower area of the headrest of the seat back cushion (21), which close to the shoulder of a vehicle seat occupant.

6. The seat back cover according to Claim 5, wherein the transition part (223) is adapted to facilitate assembly and/or disassembly of the upholstery material (12) of the seat back cushion (21) of the vehicle seat.

7. The seat back cover according to Claim 3, wherein the second part (222) of the retaining channel (22) oriented along the **X**-axis coincides with the demolding direction of the seat back cover (13).

8. The seat back cover according to Claim 7, wherein the second part (222) of the retaining channel (22) along the **X**-axis corresponds to the upper side of the headrest of the seat back cushion (21) of the vehicle seat.

9. The seat back cover according to Claim 2, wherein the first part (221) of the retaining channel (22) along the **Y**-axis corresponds to the lateral side of the seat back cushion (21) of the vehicle seat.

10. The seat back cover according to any of the preceding claims, wherein the bottom of the retaining channel (22) has a suitable depth to press-fit the edge of the upholstery material (12) along the length of said retaining channel (22).

11. The seat back cover according to any of the preceding claims, wherein the retaining channel (22) is integrally formed or molded into the seat back cover (13), forming a single body.

12. A rear vehicle seat back assembly, comprising:
- a seat back cushion support structure (21) adapted to be attached to the vehicle seat frame,
- a seat foam adapted to cover the seat back cushion support structure (21),
- upholstery material (12), and
- a seat back cover (13) according to any of the preceding claims, wherein the "**U**"-shaped retaining channel (22) is set to press-fit the outer peripheral edge of the upholstery material (12), such that the seat back cover (13) and the upholstery material (12) externally cover the seat back assembly (11) of the vehicle seat.

13. The rear seat back assembly according to Claim 12, comprising an airbag cover (15) arranged on at least one of the side surfaces of the seat back cover (13), covering an outlet opening for an airbag (23), wherein said airbag cover (15) is set to pivot in relation to the seat back cover (13) upon expansion of the airbag (23), which pushes said airbag cover (15) and slides along the outer side surface of the seat back cover (13) and over the upholstery material (12), whose outer peripheral edge is press-fitted within the retaining channel (22).
